# EUROPEAN PATENT SPECIFICATION

(11) **EP 1 482 750 B1**
(45) Date of publication and mention of the grant of the patent: **24.06.2009**
(21) Application number: 03709563.5
(22) Date of filing: 14.02.2003
(51) Int. Cl.: H04W 36/10

(54) **A METHOD OF OPTIMIZING SOFT HANDOVER BETWEEN RADIO NETWORK CONTROLLERS**
VERFAHREN ZUR OPTIMIERUNG DER SOFT-WEITERREICHUNG ZWISCHEN FUNKNETZWERKSTEUERUNGEN
PROCEDE D'OPTIMISATION DU TRANSFERT INTERCELLULAIRE SANS COUPURE ENTRE CONTROLEURS DE RESEAUX RADIO

(30) Priority: 05.03.2002 CN 02103985
(43) Date of publication of application: 01.12.2004
(73) Proprietor: Huawei Technologies Co., Ltd., Nanshan District, Shenzhen 518057 (CN)
(72) Inventor: GAO, Quanzhong, Shenzhen, Guangdong 518057 (CN); ZHAO, Jianguo, Shenzhen, Guangdong 518057 (CN)
(74) Representative: Mounteney, Simon James
(86) International application number: PCT/CN2003/000132
(87) International publication number: WO 2003/075591

(56) References cited:
- WO-A-00/54531
- WO-A1-01/19116
- WO-A2-01/30107

## Description

### Field of the Technology

The present invention relates generally to soft handover technology in a radio communication system, and more particularly to an optimized method of a soft handover between RNCs (Radio Network Controllers) that has a shorter handover path.

### Background of the Invention

A UMTS (Universal Mobile Telecommunication System) is a third generation mobile telecommunication system deploying W-CDMA (Wide-band CDMA) air interface, and in general it is known as W-CDMA telecommunication system. A UMTS includes several network elements that can be grouped based on their functions or the sub-network they belong to.

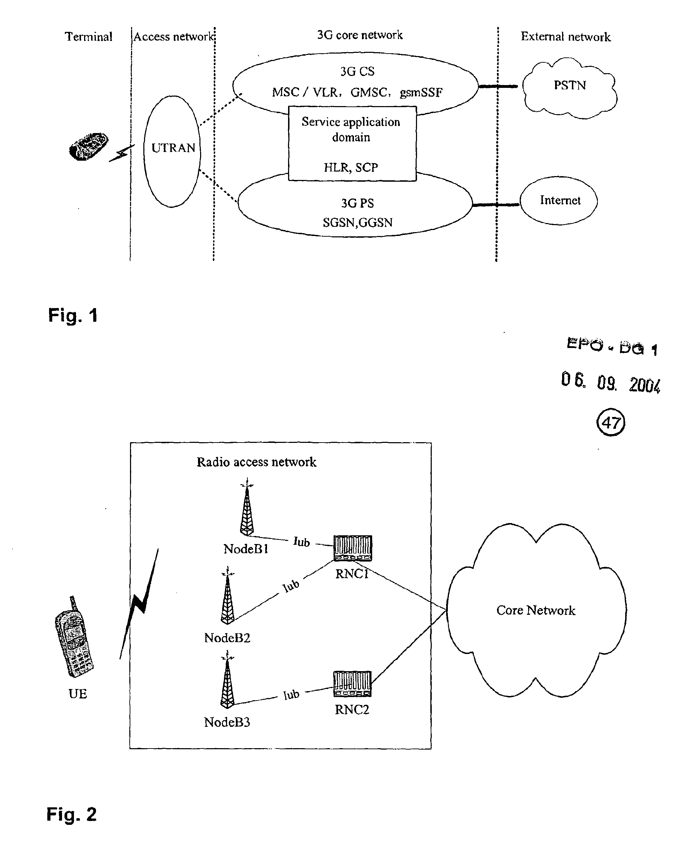

From the functional point of view, network elements can be divided into RAN (Radio Access Network) and CN (Core Network). The RAN includes two network elements: a RNC (Radio Network Controller) and a Node B to deal with the functions concerning about radio, and the CN mainly deals with the voice and data switching and routing functions to an external network. A UMTS is consisted of a RAN, a CN and UE (User Equipment), as shown in Figure 1. Through UTRAN (UTMS Terrestrial Radio Access Network) and CN, a UE makes communication with other radio subscribers inside the UMTS, on the other hand, by connecting to UTRAN and CN, a UE makes voice and data communication with other radio subscribers out side the UMTS.

The W-CDMA protocol includes three releases: Rel.'99, Rel.'4 and Rel.'5, and at present the Rel.'99 and Rel.'4 are deployed mainly. In the Rel.'99 and Rel.'4, there are interfaces: Iu, Iur and Iub in RAN, and they are base on ATM (Asynchronous Transfer Mode). The Iu is an interface between RNC and CN; the Iur is an interface between two RNCs that support signaling of a soft handover and one or multiple Iur data streams that are user data stream of macro diversity during a UE soft handover between RNCs; the Iub is an interface between a RNC and a Node B. Besides, between RNC and Node B is a tight coupling, i.e. RNC is the management and control element of the radio access network; the RNC centrally controls radio resource and other resources, and interface between the radio access network and the core network; a RNC can control multiple Node B, but a Node B is only controlled by a RNC, as shown in Figure 2.

Handover is one of the obvious characteristics that differentiate a mobile telecommunication system from a fixed telecommunication system. The handover supported by W-CDMA includes soft handover, hard handover, forward handover and system handover. A network initiates the soft handover and hard handover, and a UE initiate a forward handover; while a system handover is initiated either at the network side or the UE side. A handover happens because of a UE roaming, an optimizing configuration of resource or a manual intervention etc.

In a W-CDMA system, same frequency exists in neighbor cells. A UE can communicate with the network through multiple radio links, during combination of the multiple radio links according to a certain criterion, such as a bit error rate, the UE selects a link with better quality as its uplink after comparing the received data from different links; in this way a UE can handover smoothly from one cell to another and the communication quality is optimized. Usually, the W-CDMA deploys macro diversity to combine radio links, and cells related with the UE belong to an activation set, an observation set or a detection set. An activation set is the set of cells that a UE are currently in; an observation set is the set of cells that are neighbor to the activation set based on the message given by the UTRAN, and cells in the observation set is measuring and when a certain condition is satisfied a cell in the observation set will be joined to the activation set, so it is also called candidate set; a detection set is the set of cells that their signal have be detected by the UE but they belong to neither the activation set nor the observation set. Based on position of a cell, a soft handover can be divided into the following situations:
(1) A soft handover happens between cells in a Node B, and radio links can be combined in the Node B or in the Serving RNC; if the combination is completed in the Node B, it is called a softer handover.
(2) A soft handover happens between different Node B in a RNC.
(3) A soft handover happens between different RNCs.

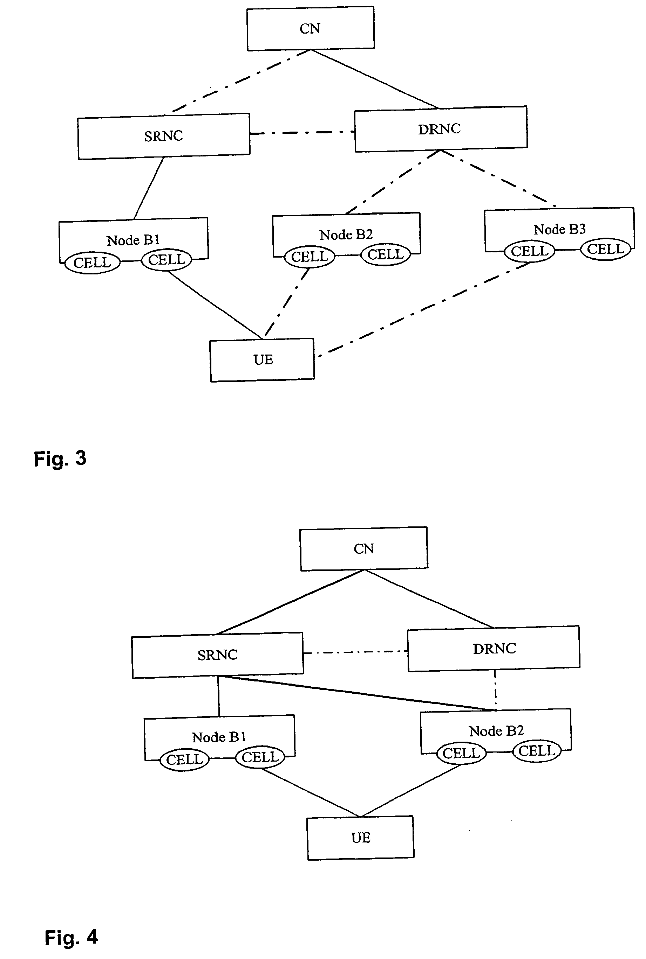

A soft handover between different RNCs is shown in Figure 3. Where Node B1 is the current base station belongs to the activation set and is controlled by the SRNC (Serving RNC). Node B2 and Node B3 are two neighbor base stations, belong to the observation set and are controlled by the DRNC (Drift RNC); they will join the activation set at any time. During soft handover, the data streams are shown as the dot-lines in Figure 3. When the UE uplink data stream has been sent to the DRNC through an corresponding Node B, it is sent to the SRNC for processing through an Iur interface; the downlink data stream from the SRNC to the UE also is passed through the DRNC and an Iub to the Node B. Since at present network a RNC and its Node Bs are tightly coupled, i.e. a Node B only can be controlled by a RNC; during soft handover, signaling from SRNC to the Node B2 or Node B3 must be sent through the DRNC, so the signaling procedure is more complicated.

Taking the UE handover from the Node B1 to the Node B2 in figure 3 as an example, the soft handover between RNCs is consisted of the following steps:
(1) Suppose the UE using the Node B1 as its Node B, the UE measures signals of co-frequency neighbor cells to obtain a measuring result, according to a SRNC measurement control information, and responds the measuring result to the SRNC;
(2) According to the measuring result, such as a signal strength, a bit error rate, a signal-interference ratio etc., the SRNC makes a handover decision to determine whether a soft handover is necessary;
(3) After the handover decision has been made, if there is a new radio link to be added to the Node B2 then a resource preparation message is sent to the Node B2 through the DRNC;
(4) After the signaling connection between the DRNC and Node B2 has been established by the SRNC, a data bearer from the DRNC to the Node B2 and a data bearer from the DRNC to the SRNC are established at the same time, and then through the activation set update message the UE is notified to add and/or delete a radio link;
(5) After the UE has successfully updated the activation set, a radio link is added to the Node B2; and if it is necessary to delete the original cell, then notify the Node B 1 to release the resources.

In a present radio access network, since a RNC controls and manages multiple Node B and a Node B only can be controlled by a RNC, so the radio access network is a star structure. When a handset moves frequently and usually the handset is moved out of the area covered by a RNC, soft handover between RNCs is happened frequently and usually accompanying SRNC relocation; all of this will increase the network and handset burden. Since radio resource of the Node B is managed and controlled by the RNC that it belongs to; when a UE is moved along the two RNC edge, it is necessary to execute frequently the soft handover/hard handover between these two RNCs. In this case the signaling procedure is complicated, the handover is easy to failure and equipment is complicated, moreover the DRNC must take part in the handover, so the path is not optimized. In summary, at present the soft handover between two RNCs takes a path of two segments: Node B --- DRNC --- SRNC, which not only increases processing burden in a DRNC, but also increase time delay to the signaling procedure and data transmission.

Further, PCT patent application WO 00/54531 provides a method for allocating resources in a radio communications system, in which a portion of the channels made available by the base stations are withdrawn from exclusive control by the assigned base station controller,

Furthermore, PCT patent application WO 01/30107 provides a Radio Access Network (RAN) and a method for rapid handover of a mobile station between a Source Radio Network Controller and a Target Radio Network Controller in the RAN.

### Summary of the Invention

The applicant of the present invention has proposed a resource management method of a Node B. With that method, resources of the Node B is managed and controlled by the Node B itself; the method changes the radio access network to a network structure, where the Node B and the RNC is a many-to-many relationship. Therefore, a Node B can allocate its resource to multiple RNCs and a RNC can control more Node Bs and cover a larger area. In this way many of the handover between two or multiple RNCs are changed to the handover between cells in the same RNC, so the handover complexity is reduced greatly and the success rate of a handover is raised.

Based on the thinking of said patent application, objective of the invention is to provide an optimized soft handover method between RNCs in order to decrease the frequent handover between RNCs and reduce the complexity of a handover, in this way the handover reliability, stability and success rate will be raised.

For the above objective, the technical scheme of the invention is as following:
A method of optimizing soft handover between RNCs at least includes the following steps:
   a. according to measurement control information provided by the corresponding SRNC of a Node B to which a UE currently belongs, measuring signals of co-frequency neighbor cells by the UE to obtain a measuring result;
      reporting the measuring result to the SRNC by the UE;
   b. making a handover decision according to the measuring result by the SRNC, and determining whether to make a soft handover; if not, then continuing to make handover decision; if yes, then determining whether the SRNC has right to dispatch common resources of a target Node B to which the UE is to handover, the target Node B and the SRNC not being directly connected,
   c. if yes, applying for required common resources to a specific functional entity that controls the common resources of said target Node B by said SRNC, and then going to Step d; if not, then initiating a soft handover between RNCs, and ending; said required common resources are the new radio link resources for a soft handover;
   d. according to status of current use of common resources of the target Node B, responding whether the common resources are available by said specific functional entity, if yes, establishing a direct connection between the SRNC and the target Node B by the SRNC, and initiating a soft handover within RNC, otherwise, initiating a soft handover between RNCs. Said whether the common resource are available is determined by whether there are idle common resources in the target Node B.
In Step b, wherein the measuring result is such as a signal strength, the bit error rate, the signal-interference ratio etc..
In Step c, wherein the specific functional entity is a logical functional entity within the target Node B or a logical functional entity in a network server.
When the SRNC having no the right to dispatch the common resource of the target Node B2 or the common resource are unavailable, said initiating a soft handover between RNCs further comprises:
   setting the currently corresponding RNC of said target Node B as a DRNC,
   establishing a link between the SRNC and DRNC, and
   making a soft handover between the SRNC and DRNC with the present technique.

The method further comprises:
retrieving the corresponding common resources by the target Node B, when a soft handover has been completed, and the link between the SRNC and the target Node B needs to be disconnected.

It can be seen from the mention above, the key point of the invention is that during a handover, since the Node B can allocate its resources to multiple RNCs, the Node B that does not belong to the current SRNC can reallocate its resources to the SRNC and communicates with the SRNC directly, i.e. a handover between RNCs is changed to a handover within a RNC.

The optimized soft handover method of the invention is based on the optimized resource control and management method that a Node B manages its own resources and its resources can be shared by multiple RNCs. Node B resources are divided into two parts: dedicate resources and common resources. The dedicate resources of Node B are statically allocated to the CRNC, and the common resources are dynamically allocated to other RNCs. Since a Node B can allocate its resource to multiple RNCs, when a UE roams out of the area covered by the current RNC, according to the measurement response, the current RNC can apply for channel resources to the new Node B and establishes signaling and data channels with the new Node B directly; in this way a lot of handovers between RNCs are changed to handovers between cells in the same RNC, so the cover area of a RNC is extended. The characteristics and advantages of the method of the invention are as following:
(1) Since a lot of handover between RNCs are changed to handover within a RNC and a SRNC can communicate with the original and new Node B at the same time, so handover complexity is greatly reduced and handover reliability, stability and success rate are raised.
(2) During handover between RNCs, data from a UE to the SRNC are through a shorter path without passing a DRNC, so the time delay of the macro diversity data is improved, processing inside a UTRAN is simplified, the network performance is optimized and the processing efficiency is raised.
(3) When the UTRAN takes WCDMA rel.'5 or later, IP network joins a RAN, and between a RNC and a Node B is a dynamic IP network; in this case the routing and addressing of a RAN can be implemented simply and easily.

### Brief Description of the Drawings

Figure 1 shows a UMTS diagram.
Figure 2 shows a diagram of the present radio access network.
Figure 3 shows a path diagram of soft handover between RNCs with the present technique.
Figure 4 shows a path diagram of soft handover between RNCs with the method of the invention.
Figure 5 shows a flow diagram when a handover between RNCs is changed to a handover within a RNC.
Figure 6 shows a management flow diagram of resources of a Node B that does not broadcast its common resources.
Figure 7 shows a management flow diagram of resources of a Node B, when a server in the network controls the resources.
Figure 8 shows an IP UTRAN diagram.

### Embodiments of the Invention

The invention is based on that a Node B manages its own resource that includes the resource of cells, physical channels and transport channels etc.; all these resources are divided into two parts: dedicate resources and common resource. The dedicate resources are only used by the CRNC (Controlling RNC), and the common resources are used by all non-controlling RNC. During initialization or when resources of a Node B are changed, the common resources are broadcast to all non-controlling RNCs; and when a non-controlling RNC wants to use common resources, it must apply for admission from Node B.

In this invention, the Node B Application protocol (NBAP) is used for SRNC and Node B interface to establish signaling and data link, to send and receive signaling or radio frames. When a UE has roamed to an area where need to handover between RNCs, the UE handover to a target RNC that is the SRNC now. The SRNC requests cells resources provided by the Node B through the NBAP, and after confirming that resources are available and can be allocated, the Node B responses to the request and establishes a radio link between the SRNC and the Node B through a signaling procedure. Without through the DRNC, the invention shortens the handover path, so it is easier to implement and has a higher efficiency.

As shown in figure 4, the dot-line represents a handover path of the present technique, where the path is from the target Node B2 to the SRNC through the DRNC; the black line represents a handover path of the invention, where the SRNC has a link with the target Node B2 directly. In figure 4, the SRNC and DRNC may belong to same CN or different CNs.

The handover of the invention comprises the following steps:
(1) According to the measurement control information from the SRNC that the Node B1 belongs to, a UE measuring signals of co-frequency neighbor cell to obtain a measuring result, and the UE reports the processed measuring result to the SRNC.
(2) According to the measuring result, such as a signal strength, a bit error rate, a signal-interference ratio etc., the SRNC makes a handover decision, and determines whether a soft handover is necessary; if a soft handover is unnecessary, then makes other handover decision; if a soft handover is necessary, then determines whether the SRNC has right to dispatch the common resource of the target Node B2 of the UE.
(3) When having right to dispatch the common resource of the Node B2, the SRNC applies for required common resources of the Node B2, such as adding new radio links, to a specific functional entity that controls the common resources of the target Node B, and then the procedure goes to Step 4); said specific functional entity is a logical functional entity that may exist in the Node B2 or in a network server;
   When the SRNC does not have right to dispatch the common resource of the Node B2, the current RNC of the Node B2 is defined as the DRNC and a link between the SRNC and DRNC is connected, then a soft handover is initiated with the present technique, and the procedure is ended.
(4) According to the status of current use of common resources of the Node B2, such as whether there are idle resources etc., said specific functional entity responses whether the common resources are available, i.e., when there are idle resources, it is responded that resources are available, otherwise no resources are available.
(5) When no resources are available, the SRNC defines the RNC of the Node B2 as the DRNC, and establishes a link between the SRNC and DRNC and deploys the present handover procedure to initiate a soft handover between RNCs, and then the procedure is ended.
   When resources of the Node B2 are available, the SRNC establishes a link between the SRNC and the Node B2, and initiates a soft handover within a RNC.
   After resources interaction between the SRNC and Node B2 has been accomplished, a direct data bearer between the SRNC and Node B2 is set up, through the activation set update message the UE is notified to add and/or delete radio links.
(6) After having updated the activation set successfully, the UE adds a radio link under the Node B2; and if deleting a cell is necessary, the Node B1 is notified to release resources accordingly.
(7) When roaming to its original cell or to other cell, the UE deletes the link through the signaling connection between the SRNC and Node B2.

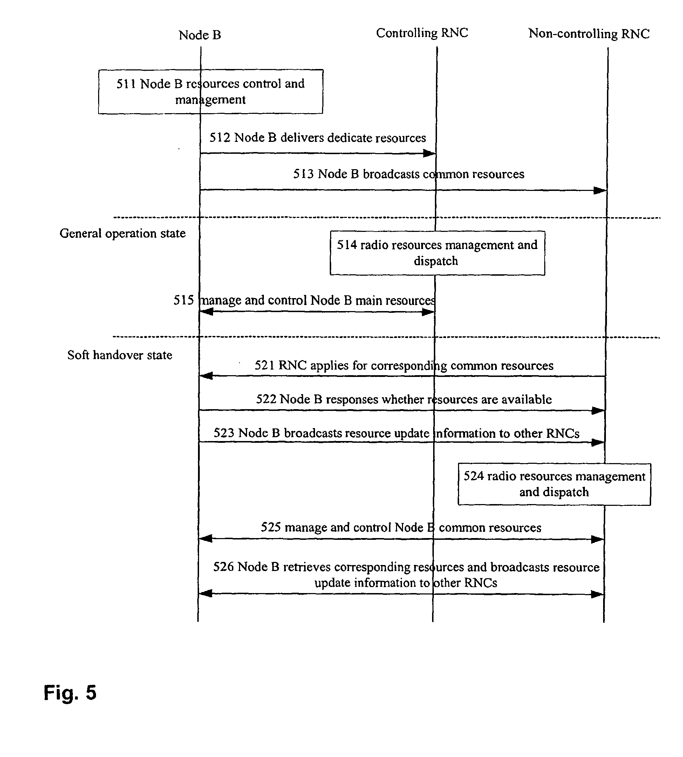

The invention is based on that the Node B manages its own resources, although the current base station Node B1 and the target base station Node B2 belong to different RNCs, the Node B2 may allocates its own resources to the SRNC to use and control. In figure 5, Step 511 shows what the Node B controls and manages its own resources. During initialization or its resources being changed, the Node B sends its dedicate resources information to the CRNC and broadcasts its common resources information to the non-controlling RNCs, as shown in Steps 512 and 513; said common resources information includes that the latest resources information of the Node B that can be used by RNCs and the RNC authorization etc. During a general operation state, after having received the Node B resources information the CRNC dispatches corresponding radio resources □ manages and controls the Node B main resources, as shown in Steps 514 and 515.

When a non-controlling RNC determines to make a soft handover based on the reported measuring result from the UE, at this moment the non-controlling RNC being the SRNC, the SRNC looks for whether there are common resources available in the broadcast Node B common resources information; if there are, the SRNC applies for corresponding common resources from the Node B and makes a soft handover, as shown in Steps 521 to 526.

It is possible to set all the Node Bs in a city those are controlled by the RNCs of the city, and the handover times between the RNCs in the city can be decreased greatly. When common resources of Node Bs have been partitioned reasonably, in general, it is almost unnecessary to make handover between RNCs during a UE moves within the city.

The invention will be described in more detail with reference to drawings and embodiments.

Embodiment 1: a soft handover is implemented when only a common resources indication is broadcast.

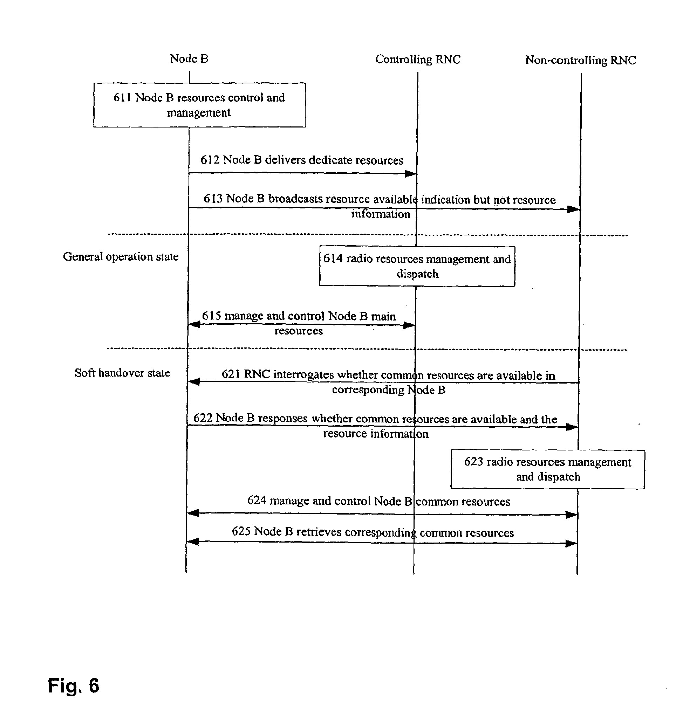

Reference to figure 6, in this embodiment the Node B controls and manages its own resources at Step 611. During initialization or its resources being changed, the Node B sends the dedicate resources information to the CRNC, and broadcast only an indication of its common resources available to the non-controlling RNC instead of the common resources information; said information includes that the latest resources information of the Node B that can be used by RNCs and the RNC authorization etc., as shown in Steps 612 and 613. In a general operation state, the CRNC controls and dispatches corresponding radio resources □ manages and controls the Node B main resources through interaction, as shown in Steps 614 and 615.

When a non-controlling RNC applies for resources of the Node B for a soft handover, the non-controlling RNC is the SRNC, and the soft handover comprises the following steps:
Step 621. The SRNC interrogates the Node B whether there are common resources available.
Step 622. The Node B determines which resources are available and returns the resources available information including a resource available response and the specific information of the available resources; if resources needed by the SRNC are available, then the procedure goes to Step 623, otherwise taking the present technique to perform the soft handover through the SRNC and DRNC; wherein the SRNC is the RNC that the UE originally belong to and the DRNC is the RNC that the UE wants to handover to, and then the procedure is ended.
Steps 623 to 624. When the necessary resources are admitted, the SRNC controls and dispatches the corresponding radio resources, manages and controls the corresponding common resources of the Node B, and then makes a soft handover between two Node Bs within the same RNC.
Step 625. After a soft handover has been completed, when the link needs to be disconnected, the Node B retrieves corresponding common resources.

Embodiment 2, a soft handover is implemented, when other server in the network controls the Node B resources.

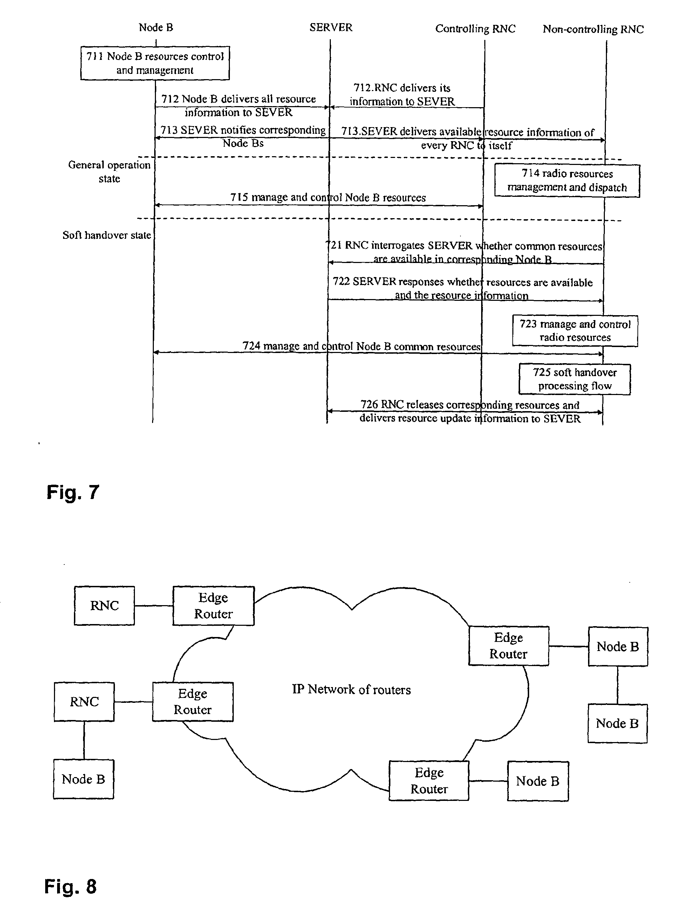

As shown in figure 7, in this embodiment the Node B still manages its own resources at Step 711, but the resources is controlled and dispatched by a server in the network; the server is a logical functional entity that is integrated in a RNC or an O&M server, or it is an independent server.

After the system is put into operation, the following steps in figure 7 is comprised:
Step 712. The Node B and all RNCs send information about themselves to the server, wherein the Node B sends a resource available information includes its latest resources and the authorized RNCs etc, the RNCs sends resource information includes fixed resources information of the Node B and the RNC identifier etc.
Step 713. According to the controlled resources of Node Bs and RNCs, the server allocates resources to each RNC based on a principle, which in general is whether resources are available, and then the server notifies each RNC the resources that can be used by the RNC and also notifies the corresponding Node B.

When a soft handover is needed, the RNC related to the soft handover is the SRNC and the handover procedure comprises the following steps:
Step 721. A resource request message is sent from the SRNC to the server to interrogate whether common resources are available in the Node B where the UE is currently roamed at; the resource request message includes a cell identifier and resources needed by the RNC, the RNC identifier, the RNC operations (request or release) etc.
Step 722. After the server has checked the resource status, if common resources are available and they are admitted to be used by the SRNC, then a message about the available common resources and authorization is responded and the procedure goes to Step 732; if no common resources are available or they are not admitted to be used by the SRNC, then a message showing that no common resources are available is responded and the soft handover takes the present technique to perform the handover through the SRNC and DRNC, wherein the SRNC is the RNC that the UE originally belong to □ and the DRNC is the RNC that the Node B, which the UE targets to, belongs to; and then the procedure is ended.
Steps 723 to 725. After the message about resources are available has been received, the SRNC manages the Node B resources and initiates a soft handover procedure that is same as the soft handover procedure within a RNC, i.e. a soft handover procedure between two Node Bs that belong to same RNC.
Step 726. After a soft handover has been completed, when a radio link needs to be disconnected, the SRNC releases the Node B resources and reports to the server a message about the resources updating.

In the W-CDMA rel.'5 or later, the IP network will join the RAN; after that, network structure of the RAN will have more changes. As shown in figure 8, an IP network exists between RNCs and Node Bs; a RNC and a Node B connect to the IP network through an ER (edge router), respectively; a RNC supports multiple Node Bs and a Node B can be connected to multiple RNCs. In this case the physical connection of Iur interface is more flexible and convenient, and during soft handover between RNCs the SRNC supports connection and communication with the source base station and target base station at the same time, so it is unnecessary to have the DRNC attending the handover procedure. Therefore, the handover path is shorter and the handover is more efficient.

The above mentions are only the embodiments of the invention; it is by no means to limit the protection scope of the invention.

## Claims

1. A method of optimizing soft handover between RNCs (Radio Network Controllers), comprising;
a. according to the measurement control information provided by a corresponding SRNC of a Node B to which a UE currently belongs, measuring signals of co-frequency neighbor cells by the UE to obtain a measuring result (511, 611, 711); reporting the measuring result to said SRNC by the UE(513, 613, 713);
b. making a handover decision according to said measuring result by said SRNC, and determining whether to make a soft handover; if not, then continuing to make handover decision; if yes, then determining whether said SRNC has right to dispatch common resources of a target Node B to which said the current UE is to handover, the target Node B and the SRNC not being directly connected;
c. if yes, applying for required common resources to a specific functional entity that controls said common resources of said target Node B by said SRNC (521, 621, 721), and then going to Step d; if not, then initiating a soft handover between RNCs, and ending; and
d. according to status of current use of common resources of said target Node B, responding whether said common resources are available by said specific functional entity (522, 622, 722), if yes, establishing a direct connection between said SRNC and said target Node B by said SRNC (524, 525, 623, 624, 724, 725), and initiating a soft handover within RNC, otherwise, initiating a soft handover between RNCs.

2. The method according to Claim 1, wherein the measuring result in step b is a signal strength measuring result.

3. The method according to Claim 1, wherein the measuring result in step b is a bit error rate measuring result.

4. The method according to Claim 1, wherein the measuring result in step b is a signal-interference ratio measuring result.

5. The method according to Claim 1, wherein the specific functional entity is a logical functional entity within said target Node B.

6. The method according to Claim 1, wherein the specific functional entity is a logical functional entity in a network server.

7. The method according to Claim 1, wherein said status of current use of common resources of said target Node B in step d is obtained according to whether there are idle common resources in target Node B.

8. The method according to Claim 1, wherein said initiating a soft handover between RNCs further comprises:
setting the currently corresponding RNC of said target Node B as a DRNC,
establishing a link between said SRNC and said DRNC, and
making a soft handover between said SRNC and said DRNC.

9. The method according to Claim 1, further comprises:
retrieving the corresponding common resources by said target Node B (526, 625, 726), when a soft handover has been completed, and said direct connection between SRNC and target Node B needs to be disconnected.

## Patentansprüche

1. Verfahren zum Optimieren der Soft-Weiterreichung zwischen RNCs (Funknetzsteuerungen), Folgendes umfassend:
a. gemäß der Messsteuerungsinformation, bereitgestellt durch eine entsprechende SRNC eines Knotens B, zu dem gegenwärtig ein Benutzergerät (UE) gehört, Signale von Co-Frequenz-Nachbarzellen durch das UE messen, um ein Messergebnis (511, 611, 711) zu erhalten; das Messergebnis durch das UE (513, 613, 713) der SRNC melden;
b. eine Weiterreichungsentseheidung gemäß dem Messergebnis durch die SRNC treffen und bestimmen, ob eine Soft-Weiterreicbung ausgeführt werden soll; falls nein, weiterhin die Weiterreiehungsentscheidung treffen; falls ja, bestimmen, ob die SRNC zum Ausliefern von gemeinsamen Ressourcen eines Zielknotens B berechtigt ist, an den das gegenwärtige UE weiterreichen soll, wobei der Zielknoten B und die SRNC nicht direkt miteinander verbunden sind;
c. falls ja, erforderliche gemeinsame Ressourcen bei einer spezifischen funktionalen Instanz anfordern, die die gemeinsamen Ressourcen des Zielkmotens B durch die SRNC (521, 621, 721) steuer und dann zu Schritt d gehen; falls nein, eine Soft-Weiterreichung zwischen RNCs initiieren und beenden; und
d. gemäß dem Status gegenwärtiger Verwendung gemeinsamer Ressourcen des Zielknotens B reagieren, ob die gemeinsamen Ressourcen durch die spezifische funktionale Instanz (522, 622, 722) verfügbar sind; falls ja, eine direkte Verbindung zwischen der SRNC und dem Zielknoten B durch die SRNC (524, 525, 623, 624, 724, 725) aufbauen und eine Soft-Weiterreichung in der RNC initiieren, anderenfalls eine Soft-Weiterreichung zwischen RNCs initiieren.

2. Verfahren nach Anspruch 1, worin das Messergebnis in Schritt b ein Signalintensitäts-Messergebnis ist.

3. Verfahren nach Anspruch 1, worin das Messergebnis in Schritt b ein Bitfehlerraten-Messergebnis ist.

4. Verfahren nach Anspruch 1, worin das Messergebnis in Schritt b ein Signal-Rausch-Verhältnis-Messergebnis ist.

5. Verfahren nach Anspruch 1, worin die spezifische funktionale Instanz eine logische funktionale Instanz im Zielknoten B ist.

6. Verfahren nach Anspruch 1, worin die spezifische funktionale Instanz eine logische funktionale Instanz in einem Netzserver ist.

7. Verfahren nach Anspruch 1, worin der Status der gegenwärtigen Verwendung von gemeinsamen Ressourcen des Zielknotens B in Schritt d in Abhängigkeit davon erhalten wird, ob es im Zielknoten B unbelegte gemeinsame Ressourcen gibt.

8. Verfahren nach Anspruch 1, worin das Initiieren einer Soft-Weiterreichung zwischen RNCs außerdem umfasst:
die gegenwärtig entsprechende RNC des Zielknotens B als eine DRNC setzen,
einen Link zwischen der SRNC und der DRNC aufbauen, und
eine Soft-Weiterreichung zwischen der SRNC und der DRNC ausführen.

9. Verfahren nach Anspruch 1, außerdem umfassend:
Abrufen der entsprechenden gemeinsamen Ressourcen durch den Zielknoten B (526, 625, 726), wenn eine Soft-Weiterreichung abgeschlossen wurde und die direkte Verbindung zwischen SRNC und Zielknoten B abgebrochen werden muss.

## Revendications

1. Procédé destiné à optimiser un transfert intercellulaire sans coupure entre des contrôleurs RNC (contrôleurs de réseau radio), comportant les étapes ci-dessous consistant à :
a. selon les informations de commande de mesure délivrées par un contrôleur SRNC correspondant d'un noeud B auquel un équipement d'utilisateur UE appartient actuellement, mesurer des signaux de cellules voisines de cofréquence par le biais de l'équipement UE, en vue d'obtenir un résultat de mesure (511, 611, 711); indiquer le résultat de mesure audit contrôleur SRNC, par le biais de l'équipement UE (513, 613, 713);
b. prendre une décision de transfert intercellulaire selon ledit résultat de mesure, par le biais dudit contrôleur SRNC, et déterminer s'il convient de mettre en oeuvre un transfert intercellulaire sans coupure; si la réponse est non, continuer alors à prendre une décision de transfert intercellulaire; si la réponse est oui, déterminer ensuite si ledit contrôleur SRNC a le droit de distribuer des ressources communes d'un noeud cible B auquel ledit équipement UE en cours doit mettre en oeuvre un transfert intercellulaire, le noeud cible B et le contrôleur SRNC n'étant pas directement connectés;
c. si le contrôleur possède ce droit, demander des ressources communes requises à une entité fonctionnelle spécifique qui commande lesdites ressources communes dudit noeud cible B par le biais dudit contrôler SRNC (521, 621, 721), et passer ensuite à l'étape d; dans le cas inverse, initier un transfert intercellulaire sans coupure entre des contrôleurs RNC, et mettre fin au processus; et
d. selon l'état d'utilisation en cours de ressources communes dudit noeud cible B, indiquer par une réponse si lesdites ressources communes sont disponibles, par le biais de ladite entité fonctionnelle spécifique (522, 622, 722), le cas échéant, établir une connexion directe entre ledit contrôleur SRNC et ledit noeud cible B par le biais dudit contrôleur SRNC (524, 525, 623, 624, 724, 725), et initier un transfert intercellulaire sans coupure au sein du contrôleur RNC, sinon, initier un transfert intercellulaire sans coupure entre les contrôleurs RIC.

2. Procédé selon la revendication 1, dans lequel ledit résultat de mesure à l'étape b est un résultat de mesure de puissance de signal.

3. Procédé selon la revendication 1, dans lequel ledit résultat de mesure à l'étape b est un résultat de mesure de taux d'erreur sur les bits.

4. Procédé selon la revendication 1, dans lequel ledit résultat de mesure à l'étape b est un résultat de mesure de rapport signal - brouillage.

5. Procédé selon la revendication 1, dans lequel l'entité fonctionnelle spécifique est une entité fonctionnelle logique au sein dudit noeud cible B.

6. Procédé selon la revendication 1, dans lequel l'entité fonctionnelle spécifique est une entité fonctionnelle logique au sein d'un serveur de réseau.

7. Procédé selon la revendication 1, dans lequel ledit état d'utilisation en cours de ressources communes dudit noeud cible B à l'étape d est obtenu selon qu'il existe ou non des ressources communes inemployées dans le noeud cible B.

8. Procédé selon la revendication 1, dans lequel ladite étape consistant à initier un transfert intercellulaire sans coupure entre des contrôleurs RNC comporte en outre les étapes ci-dessous consistant à:
définir le contrôleur RNC correspondant actuel dudit noeud cible B en tant que contrôleur DRNC;
établir une liaison entre ledit contrôleur SRNC et ledit contrôleur DRNC; et
mettre en oeuvre un transfert intercellulaire sans coupure entre ledit contrôleur SRNC et ledit contrôleur DRNC.

9. Procédé selon la revendication 1, comportant en outre l'étape ci-dessous consistant à :
récupérer les ressources communes correspondantes, par le biais dudit noeud cible B (526, 625, 726), lorsqu'un transfert intercellulaire sans coupure a été achevé, et que ladite connexion directe entre le contrôleur SRNC et le noeud cible B doit être déconnectée.
